# EUROPEAN PATENT SPECIFICATION

(11) **EP 3 666 370 B1**
(45) Date of publication and mention of the grant of the patent: **18.02.2026**
(21) Application number: 18871269.9
(22) Date of filing: 09.08.2018
(51) Int. Cl.: B01D 71/32, B01D 67/00, B01D 69/06

(54) **FLUORINE-BASED POROUS MEMBRANE AND MANUFACTURING METHOD THEREFOR**
PORÖSE MEMBRAN AUF FLUORBASIS UND VERFAHREN ZUR HERSTELLUNG
MEMBRANE POREUSE À BASE DE FLUOR ET SON PROCÉDÉ DE FABRICATION

(30) Priority: 26.10.2017 KR 20170140284
(43) Date of publication of application: 17.06.2020
(73) Proprietor: LG Chem, Ltd., Seoul 07336 (KR)
(72) Inventor: PARK, Sei Jung, Daejeon 34122 (KR); YOON, Kyunghwan, Daejeon 34122 (KR); AHN, Byeong In, Daejeon 34122 (KR); YOO, Han Sol, Daejeon 34122 (KR)
(74) Representative: Hoffmann Eitle
(86) International application number: PCT/KR2018/009113
(87) International publication number: WO 2019/083140

(56) References cited:
- JP-A- 2003 138 047
- JP-A- S61 171 505
- JP-B2- 3 580 790
- KR-A- 20090 013 190
- KR-A- 20090 017 488
- KR-A- 20120 007 743
- KR-A- 20130 136 921
- US-A- 3 962 153
- US-A1- 2013 083 528

## Description

### [Technical Field]

The present invention relates to a fluororesin porous film and a method for preparing the same, and more specifically, to a fluororesin porous film which allows only a surface to have reduced porosity by heat and thus reduces penetration of water while maintaining internal porosity and air permeability, a method for preparing the same, and a vent filter including the porous film.

### [Background Art]

Vent filters using a porous body are used for cases of various devices, and for example, are mainly applied to electrical parts for automobiles such as lamps, motors, various sensors, and pressure switches. The vent filter is also applied to mobile phones, cameras, electric razors, electric toothbrushes, outdoor lamps, and the like.

Such vent filters have excellent air permeability and thus are mainly used for preventing deformation of internal protection spaces due to pressure changes and the surrounding environment. A vent filter is provided using a generally porous film. The porous film is essential for preventing penetration of water, while maintaining high filtration efficiency and air permeability. However, when the air permeability of the porous film is increased, the size of a formed pore becomes larger, which tends to deteriorate the performance of preventing penetration of water.

In addition, a PTFE multilayer film used as a porous film is commonly known in the art, but according to previously known methods, for example as disclosed in JP 3 580790 B2, since a general hot air system is used at the time of thermal firing, the effect of preventing penetration of water relative to air permeability is insufficient.

Therefore, there is a need to develop a new vent filter which prevents degradation of water permeability while having excellent air permeability of the porous film.

### [DETAILED DESCRIPTION OF THE INVENTION]

### [Technical Problem]

It is an object of the present invention to provide a method for preparing a fluororesin porous film which is not only excellent in air permeability but is also excellent in water pressure resistance for preventing penetration of water, a fluororesin porous film produced by the above preparation method, and a vent filter including the same.

### [Technical Solution]

The present invention provides the method according to claim 1 including the steps of:
preparing a preform by using a fluorine resin-containing composition;
extruding and stretching the preform; and
positioning any one surface of the stretched preform in contact with a heating means and then firing it at 300 °C to 500 °C for 1 second to 120 seconds.

Hereinafter, preparation method according to a specific embodiment of the present invention will be described in more detail.

According to one embodiment of the invention, a fluororesin porous film may be provided, in which, based on a total thickness of the fluororesin porous film composed of a single 5 *µ*m to 300 *µ*m layer, a thickness ratio of nodes distributed on any one surface shows a difference of 5 % or more compared to a thickness ratio of nodes distributed on the other surface forming the remaining part.

That is, the fluororesin porous film is a structure formed by changing node distribution ratios on the top and bottom surfaces of a porous film composed of a single layer, which includes a film configured to have a difference in node thickness of the porous film. Further, since the fluororesin porous film of the present invention exhibits a node ratio difference on both surfaces, it may include a porous film having a node thickness difference between the inside and the outside. In addition, since the porous film shows a difference in node size and thickness on both surfaces, it also shows a difference in porosity, which can be effective in preventing penetration of water. In this case, the term "node" as used herein means a nodule formed in a porous film produced by stretching a fluorine resin such as PTFE. In addition, the porous film has a fine structure composed of a plurality of fine fibrils (fine fibers) and a plurality of nodes (nodules) connected to each other by the fibrils, which is a structure where these fine structures are continuously connected. Further, in the present invention, a method for measuring and confirming nodes distributed in the fluororesin porous film can be carried out by observing a SEM image, distinguishing thin fibrils and thick nodes, confirming the thickness of thickly formed nodes, and then calculating the ratio of an average thickness of the nodes.

In the present specification, the fluororesin porous film may refer to including a first layer in which nodes having a diameter of 0.1 *µ*m to 10 *µ*m are distributed, and a second layer in which nodes of 0.105 *µ*m to 15 *µ*m are distributed. The first layer may be a layer of which porosity is reduced by a heat treatment described later, and the second layer may be a layer of which porosity is maintained.

Therefore, in the fluororesin porous film according to the present invention, based on the total thickness of the fluororesin porous film composed of a single 5 µm to 300 *µ*m layer, the thickness of nodes on any one surface may be in the range of 0.1 *µ*m to 10 *µ*m, and the thickness of nodes on the other surface forming the remaining part may be in the range of 0.105 *µ*m to 15 µm.

In the fluororesin porous film, depending on the distribution difference of nodes on both surfaces constituting the film, the diameter distribution of any one surface of pores distributed at the inside is precisely and uniformly made in comparison with the relatively different other surface, and it can prevent the penetration of water passing through the porous film per unit time under a predetermined pressure.

More preferably, based on the total thickness of the fluororesin porous film, the thickness ratio of nodes distributed on any one surface shows a difference of 5 % to 40 % compared to the thickness ratio of nodes distributed on the other surface forming the remaining part.

The porous film of the present invention as described above may have water pressure resistance of 10 to 300 kPa under a condition where the air permeability is 0.5 to 100 s/100 cc.

The porous film may have an average pore size of 150 nm to 900 nm and a maximum pore size of 300 nm to 2500 nm.

Such fluororesin porous film may have a density of 0.10 to 1.00 g/cm' and a total thickness of 5 *µ*m to 300 *µ*m.

The fluororesin porous film may be a uniaxially or biaxially stretched laminate.

The fluororesin porous film can be produced by using various means.

As an example, the fluororesin porous film can be produced by a preparation method such as using a heating means equipped with a roll after stretching, a method of applying pressure to one surface by an external force by tension control during stretching, or a method of increasing the heating temperature of the contacting roll on the one surface in the stretching section.

Among these methods, for maintaining dimensional stability most effectively and allowing a difference in node ratio, a method using a heating means equipped with a roll after stretching may be preferable.

Thus, according to another preferred embodiment of the invention, a method of using a heating means equipped with a roll after stretching will be described.

According to the present invention, a method for preparing a fluororesin porous film is provided, including the steps of: preparing a preform by using a fluorine resin-containing composition; extruding and stretching the preform; and positioning one surface of the stretched preform in contact with the heating means and then firing it at 300 °C to 500 °C for 1 second to 120 seconds.

Since the fluororesin porous film of the present invention does not control the node thickness and the pore ratio by a general lamination method but uses a porous film formed of a single layer, a film having excellent performance can be provided by an easy method. Therefore, the porous film according to the method of the present invention consists of a single layer.

Specifically, according to the present invention, in the process of producing the preform, in order to reduce the porosity and increase the water pressure resistance only on the surface of any one side of the porous film formed of a single layer, a firing method using a heating means such as a roll may be applied to the preform which has undergone extrusion and stretching steps.

In the present invention, the distribution of nodes on one surface forming the single-layer fluorine-based porous film can be differentiated by 5 % or more relative to the other side in accordance with the above-described method. In view of the above, the present invention was completed by confirming that as compared with a conventional method, the water pressure resistance is superior in a state of maintaining the same air permeability, and penetration of water can be prevented when used as a vent filter.

The fluororesin porous film of the present invention has excellent air permeability, and can effectively prevent penetration of water while having high permeability to a liquid excluding gas and water.

More specifically, in the method for producing a fluorine-based porous film of the present invention, a preform is produced by using a fluorine resin-containing composition, and is formed into a sheet form through extrusion and stretching steps, or the like, and then fired in a state where any one surface of the sheet is positioned in contact with a heating means.

In particular, according to the present invention, a method that allows only a surface to have reduced porosity by heat and thus reduce penetration of water while maintaining internal porosity and air permeability is provided.

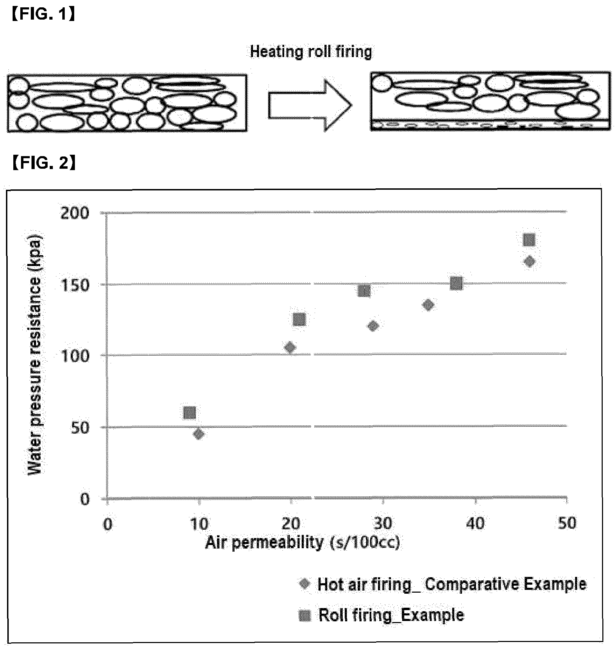

According to the above method, the porosity on one surface of the obtained porous film is deformed, and the thickness of nodes on any one surface shows a difference compared to that of nodes on the other surface (i.e., the remaining part side of the porous film) based on the total thickness of the porous film (FIG. 1). In this case, at the portion where the thickness of nodes changes, heat is applied only onto the surface of the porous film, and the porosity is reduced in the longitudinal direction.

Preferably, as described above, based on the total thickness of the fluororesin porous film of 5 *µ*m to 300 *µ*m, the thickness ratio of nodes on any one surface shows a difference of 5 % or more compared to a thickness ratio of nodes on the other surface forming the remaining part. Therefore, the porous film of the present invention can more strongly prevent penetration of water while maintaining excellent air permeability, and thus can provide a vent filter having improved performance.

Further, according to the invention, the firing step is carried out by using a heating means including a heating roll, a nipping roll, or a roll equipped with a tension adjusting means capable of applying a force in the Z-axis direction. When the roll equipped with the tension adjusting means is used, the firing step can be carried out by increasing a force in the Z-axis direction when making contact with one side of the preform for producing the porous film.

Further, in the method of the present invention, the firing step is carried out at 300 °C to 500 °C for 1 second to 120 seconds using a heating means. More preferably, it is carried out at 320 °C to 380 °C for 1 second to 60 seconds. If the temperature at the firing step is less than 300 °C, there is a problem in dimensional stability due to insufficient firing. If the temperature exceeds 500 °C, there is a problem that the melting temperature is greatly exceeded and thus all the surface pores are clogged. In addition, if the firing time at the firing step is less than 1 second, there is a problem in dimensional stability due to insufficient firing. If the firing time exceeds 120 seconds, there is a problem that surface pores are clogged due to an increase in melting contact time.

On the other hand, the preform before undergoing the firing step can be produced by extruding in the form of an extruded sheet by a conventional rolling method or the like using the above-described fluorine resin-containing composition.

The fluorine resin-containing composition basically contains a fluorine resin, and may further contain a liquid lubricant. For example, a hydrophobic liquid lubricant which is an alkane having a carbon number of 5 to 12 and a mixture thereof may be used, but the type thereof is not particularly limited. Specific examples of the liquid lubricant include IsoPar, ISOL-C, ISOL-G, and the like.

The amount of the liquid lubricant used when preforming is not particularly limited and varies depending on the type of lubricant, molding conditions, and the like. For example, the liquid lubricant may be used in an amount of 5 to 50 parts by weight, or 10 to 40 parts by weight based on 100 parts by weight of the fluorine-based resin to be used or its fine powder.

The step of extruding the preform may be carried out at a temperature of 30 °C to 100 °C.

Through the step of drying and stretching the extruded preform, each layer of the multi-layered preform can be produced into a porous structure in which fine pores are uniformly present.

In the step of stretching the extruded preform, the stretching may be carried out between rolls rotating at different speeds or may be carried out using a tenter in an oven.

The stretching of the extruded preform may be carried out uniaxially or biaxially, and the stretching ratio can be determined depending on the use of the film to be produced. For example, the step of stretching the extruded preform may include i) uniaxially stretching the extruded preform under the condition where the longitudinal or transverse stretch ratio is 2 to 50 times; or ii) uniaxially stretching the extruded preform under the condition where the longitudinal and transverse stretch ratio is 2 to 50 times, and biaxially stretching the uniaxially stretched formed article one or more times under the condition where the longitudinal or transverse stretch ratio is 2 to 50 times. Preferably, in the case of the uniaxial or biaxial stretching, each stretch ratio is preferably 2 to 10 times, more preferably 2 to 5 times, or 2 to 3 times.

That is, the vent filter product of the present invention can be provided by only uniaxial stretching, and biaxial stretching may be carried out if necessary. In this case, the longitudinal direction may be referred to as a machine direction or MD, and the thickness of the film and the direction perpendicular to MD can be referred to as a transverse direction or TD.

The temperature at the step of stretching the extruded preform may be close to or lower than the melting point of the preform. For example, the step of stretching the extruded preform may be carried out at a temperature of 100 °C to 400 °C.

On the other hand, before the step of stretching the extruded preform, the method may further include a step of sintering the preform. The sintering of the preform can be carried out, for example, at a temperature of 200 °C to 400 °C.

Before the step of stretching the extruded preform, the method may further include a step of drying the extruded preform at a temperature of 100 °C to 300 °C. Through this drying step, the liquid lubricant can be completely removed from the extruded preform.

Specific examples of the fluorine-based resin are not limited, and for example, it may be at least one fluorine-based compound selected from the group consisting of polytetrafluoroethylene (PTFE), a tetrafluoroethylene-perfluoroalkylvinylether copolymer (PFA), a tetrafluoroethylene-hexafluoropropylene copolymer (FEP), an ethylene-tetrafluoroethylene copolymer resin (ETFE), a tetrafluoroethylene-chlorotrifluoroethylene copolymer (TFE/CTFE), and an ethylene-chlorotrifluoroethylene resin (ECTFE).

The fluorine-based resin such as polytetrafluoroethylene (PTFE) is a plastic having excellent heat resistance and chemical resistance. The porous film made of the fluorine-based resin can be widely used as a filter medium for corrosive gas and liquid, a permeable membrane for electrolysis, and a battery separator. Further, it can be used to precisely filter various gases and liquids used in the semiconductor industry.

In particular, as shown in FIG. 1, in the fluororesin porous film produced according to the preparation method of the embodiment, only the surface of one side has reduced porosity by heat compared to the conventional one, and so the node distribution of the porous film may show a difference of 5 % or more as compared with the other surface.

Accordingly, the diameter distribution of pores distributed inside the surface of one side of the porous film of the present invention is changed, and thus can become precise and uniform. Therefore, since the porous film can effectively prevent penetration of water while maintaining excellent air permeability, it is possible to prevent deformation of the internal protection space due to the pressure change and the surrounding environment.

In addition, in the conventional porous film, the shape and the diameter of pores distributed at the inside become large due to the applied pressure during filtration, and filtration characteristics may be greatly deteriorated due to rupture of the film itself. However, the fluororesin porous film produced according to the preparation method of the embodiment not only has excellent mechanical properties, and also the form and shape of the internal pores and the like do not change greatly during the preparation process and the filtration operation.

According to another embodiment of the present invention, a vent filter including the fluororesin porous film is provided.

That is, in forming the fluororesin porous film of the present invention, since the thickness ratio of nodes distributed on one surface shows a difference of 5 % or more compared to the thickness ratio of nodes distributed on the other surface forming the remaining part, the performance of the vent filter product including the same is improved.

The vent filter includes the fluororesin porous film of the present invention described above, and thus can be provided and used according to a method that is well known in the art.

### [ADVANTAGEOUS EFFECTS]

According to the present invention, a fluororesin porous film which is formed by changing the node and pore ratios of any one surface (upper surface) forming the porous film and the other surface (lower surface) forming the remaining part can be provided. The fluororesin porous film may be provided by allowing only one surface to have reduced porosity by heat using a heating roll while maintaining the porosity and air permeability of the inside, and can also increase the role of reducing penetration of water. Accordingly, the present invention can provide a fluororesin porous film having excellent air permeability and improved water pressure resistance, and a vent filter including the same.

### [BRIEF DESCRIPTION OF DRAWINGS]

FIG. 1 schematically shows a method of reducing porosity by firing only the surface with heat in the porous film of the present invention.
FIG. 2 is a graph showing the relationship between the water pressure resistance and the air permeability according to examples of the present invention and comparative examples.
FIG. 3 is a scanning electron microscope image showing differences in node distribution on a first surface and a second surface of the surface of the porous film of Comparative Example 1 and Example 1.
FIG. 4 is a scanning electron microscope image showing differences in node distribution on a first surface and a second surface of the surface of the porous film of Comparative Example 2 and Example 2.
FIG. 5 is a scanning electron microscope image showing differences in node distribution on a first surface and a second surface of the surface of the porous film of Comparative Example 3 and Example 3.

### [DETAILED DESCRIPTION OF THE EMBODIMENTS]

Hereinafter, the present invention will be described in more detail by way of the following examples. However, these examples are set forth to illustrate the invention, and the scope of the invention is not limited thereto.

### [Example 1: Preparation of PTFE porous film]

100 parts by weight of polytetrafluoroethylene powder (CD145E, AGC) was mixed with 22 parts by weight of a liquid lubricant (trade name: "Isopar H", Exxon Co.) to prepare a single-layer preform.

Then, the single-layer preform was extruded at a temperature of 50 °C at a rate of 50 mm/min to prepare a sheet having a thickness of about 300 *µ*m. The sheet thus prepared was heated at a temperature of about 200 °C to completely dry the liquid lubricant.

After the drying step, the preform was uniaxially stretched under the conditions shown in Table 1 below.

Subsequently, the stretched preform was fired at a temperature of 360 °C for 10 seconds by using a heating roll to obtain a PTFE porous film.

### [Example 2: Preparation of PTFE porous film]

100 parts by weight of polytetrafluoroethylene powder (CD145E, AGC) was mixed with 26 parts by weight of a liquid lubricant (trade name: "Isopar H", Exxon Co.) to prepare a single-layer preform.

Then, the single-layer preform was extruded at a temperature of 50 °C at a rate of 50 mm/min to prepare a sheet having a thickness of about 300 *µ*m. The sheet thus prepared was heated at a temperature of about 200 °C to completely dry the liquid lubricant.

After the drying step, the preform was uniaxially stretched under the conditions shown in Table 1 below.

Subsequently, the stretched preform was fired at a temperature of 360 °C for 10 seconds by using a heating roll to obtain a PTFE porous film.

### [Example 3: Preparation of PTFE porous film]

100 parts by weight of polytetrafluoroethylene powder (6J, MDF) was mixed with 22 parts by weight of a liquid lubricant (trade name: "Isopar H", Exxon Co.) to prepare a single-layer preform.

Then, the single-layer preform was extruded at a temperature of 50 °C at a rate of 50 mm/min to prepare a sheet having a thickness of about 300 *µ*m. The sheet thus prepared was heated at a temperature of about 200 °C to completely dry the liquid lubricant.

After the drying step, the preform was uniaxially stretched under the conditions shown in Table 1 below.

Subsequently, the stretched preform was fired at a temperature of 360 °C for 10 seconds by using a heating roll to obtain a PTFE porous film.

### [Comparative Example 1: Preparation of PTFE porous film]

A PTFE porous film was obtained in the same manner as in Example 1, except that in the firing step, a hot air system was used instead of a heating roll.

### [Comparative Example 2: Preparation of PTFE porous film]

A PTFE porous film was obtained in the same manner as in Example 2, except that in the firing step, a hot air system was used instead of a heating roll.

### [Comparative Example 3: Preparation of PTFE porous film]

A PTFE porous film was obtained in the same manner as in Example 3, except that in the firing step, a hot air system was used instead of a heating roll.

### [Experimental Examples]

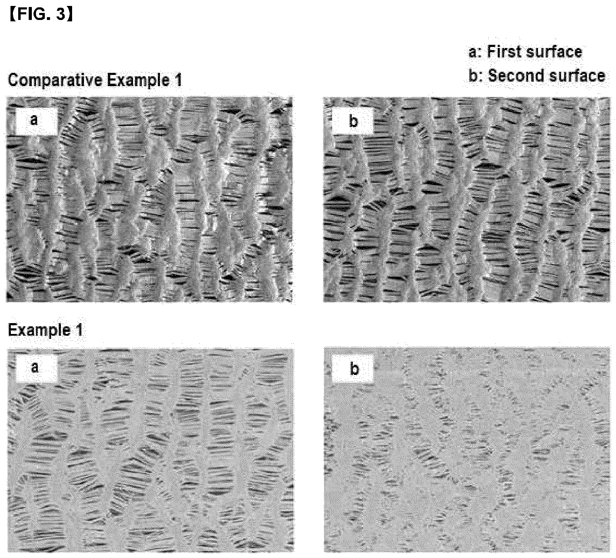

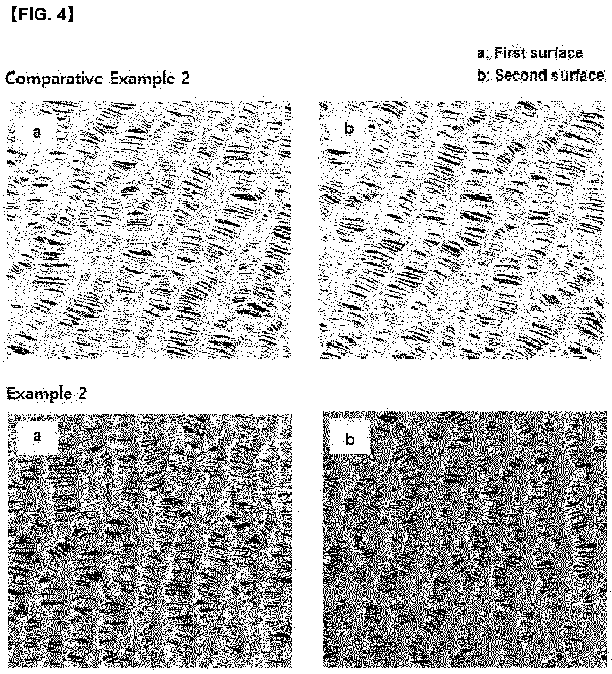

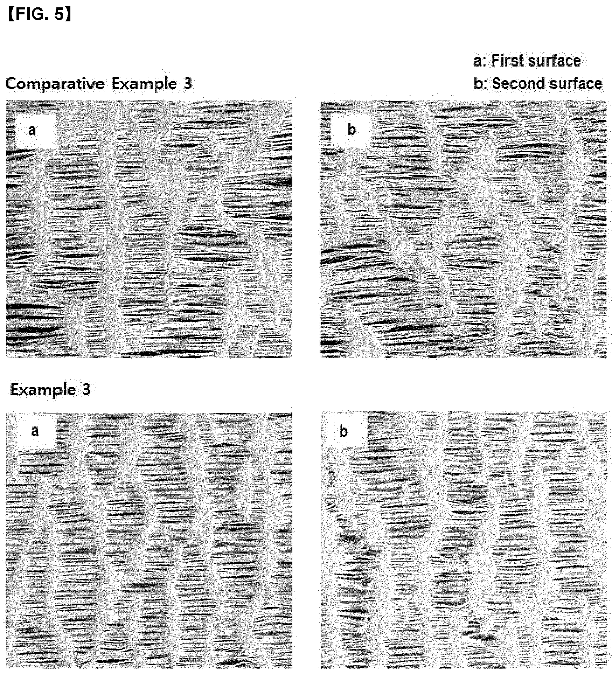

The air permeability, the maximum pore size, the node thickness, and the water pressure resistance were measured for the examples and comparative examples according to an ordinary method, and the results are shown in Table 1 and FIGS. 2 to 5.

**[Table 1]**

| | Example 1 | Example 2 | Example 3 | Comparati ve Example 1 | Comparati ve Example 2 | Comparat ive Example 3 |
|---|---|---|---|---|---|---|
| Kind of resin | CD145E | CD145E | 6J | CD145E | CD145E | 6J |
| Isopar content (parts by weight) | 22 | 26 | 22 | 22 | 26 | 22 |
| Stretch temperature (°C) | 200 | 200 | 300 | 200 | 200 | 300 |
| Stretch ratio | X2.5 | X2.5 | X3 | X2.5 | X2.5 | X3 |
| Heat setting method | 360 °C firing system by heating roll | 360 °C firing system by heating roll | 360 °C firing system by heating roll | 360 °C Hot air system | 360 °C Hot air system | 360 °C Hot air system |
| Air permeability (s/100 cc) | 46 | 21 | 9 | 46 | 20 | 10 |
| Max. Pore size (nm) | 690 | 998 | 1353 | 790 | 1178 | 1903 |
| First surface vs. second surface node thickness difference | 39.4 % | 34 % | 14.5 % | 4.5% | 3% | 0.5% |
| Water pressure resistance (kPa) | 180 | 125 | 60 | 165 | 105 | 45 |

As can be seen in Table 1 and FIGS. 2 to 6 above, it can be confirmed that the PTFE porous films prepared in Examples 1 to 3 have improved water pressure resistance characteristics under the same air permeability condition as compared to Comparative Examples 1 to 3.

In particular, it can be confirmed that the present invention can effectively prevent penetration of water because the thickness of nodes on one surface shows a difference of 14.5 % to 39.4 % compared to the thickness on the other surface (second surface) in forming of the porous film.

## Claims

1. A method for preparing a vent filter comprising a fluororesin porous film, the method comprising the steps of:
preparing a preform by using a fluorine resin-containing composition;
extruding and stretching the preform; and
positioning one surface of the stretched preform in contact with a heating means and then firing it at 300 to 500 °C for 1 second to 120 seconds,
wherein the firing step is carried out by using a heating means including a heating roll, a nipping roll, or a roll equipped with a tension adjusting means capable of applying a force in the Z-axis direction, wherein the Z-axis direction refers to the direction through the thickness of the film.

2. The method according to claim 1, wherein the step of stretching the extruded preform includes:
i) uniaxially stretching the extruded preform under the condition where the longitudinal or transverse stretch ratio is 2 to 50 times; or
ii) uniaxially stretching the extruded preform under the condition where the longitudinal or transverse stretch ratio is 2 to 50 times, and biaxially stretching the uniaxially stretched formed article one or more times under the condition where the longitudinal or transverse stretch ratio is 2 to 50 times.

3. The method according to claim 1, wherein the fluororesin includes at least one fluorine-based compound selected from the group consisting of polytetrafluoroethylene (PTFE), a tetrafluoroethylene-perfluoroalkylvinylether copolymer (PFA), a tetrafluoroethylene-hexafluoropropylene copolymer (FEP), an ethylene-tetrafluoroethylene copolymer resin (ETFE), a tetrafluoroethylene-chlorotrifluoroethylene copolymer (TFE/CTFE), and an ethylene-chlorotrifluoroethylene resin (ECTFE).

## Patentansprüche

1. Verfahren zur Herstellung eines Entlüftungsfilters, umfassend eine poröse Fluorharzfolie, wobei das Verfahren die folgenden Schritte umfasst:
Herstellen einer Vorform unter Verwendung einer fluorharzhaltigen Zusammensetzung;
Extrudieren und Strecken der Vorform; und
Positionieren einer Oberfläche der gestreckten Vorform in Kontakt mit einer Heizeinrichtung und anschließendes Brennen bei 300 bis 500 °C für 1 Sekunde bis 120 Sekunden,
wobei der Brennschritt unter Verwendung einer Heizeinrichtung durchgeführt wird, umfassend eine Heizwalze, eine Klemmwalze oder eine Walze, die mit einer Spannungsanpassungseinrichtung ausgestattet ist, die eine Kraft in Z-Achsenrichtung ausüben kann, wobei die Z-Achsenrichtung die Richtung durch die Dicke der Folie bezeichnet.

2. Verfahren gemäß Anspruch 1, wobei der Schritt, bei dem die extrudierte Vorform gestreckt wird, umfasst:
i) uniaxiales Strecken der extrudierten Vorform unter der Bedingung, unter der das Längs- oder Querstreckverhältnis das 2- bis 50-fache beträgt; oder
ii) uniaxiales Strecken der extrudierten Vorform unter der Bedingung, unter der das Längs- oder Querstreckverhältnis das 2- bis 50-fache beträgt, und ein- oder mehrmaliges biaxiales Strecken des uniaxial gestreckten Formkörpers unter der Bedingung, unter der das Längs- oder Querstreckverhältnis das 2- bis 50-fache beträgt.

3. Verfahren gemäß Anspruch 1, wobei das Fluorharz mindestens eine Verbindung auf Fluorbasis enthält, die ausgewählt ist aus der Gruppe bestehend aus Polytetrafluorethylen (PTFE), einem Tetrafluorethylen-Perfluoralkylvinylether-Copolymer (PFA), einem Tetrafluorethylen-Hexafluorpropylen-Copolymer (FEP), einem Ethylen-Tetrafluorethylen-Copolymerharz (ETFE), einem Tetrafluorethylen-Chlortrifluorethylen-Copolymer (TFE/CTFE) und einem Ethylen-Chlortrifluorethylen-Harz (ECTFE).

## Revendications

1. Procédé de préparation d'un filtre d'aération comprenant un film poreux en résine fluorée, le procédé comprenant les étapes suivantes :
la préparation d'une préforme à l'aide d'une composition contenant de la résine fluorée ;
l'extrusion et étirage de la préforme ; et
le positionnement d'une surface de la préforme étirée en contact avec un moyen de chauffage, puis cuisson à une température de 300 à 500 °C pendant 1 à 120 secondes, dans lequel l'étape de cuisson est réalisée à l'aide d'un moyen de chauffage comprenant un rouleau chauffant, un rouleau de pincement ou un rouleau équipé d'un moyen de réglage de tension capable d'appliquer une force dans la direction de l'axe Z, dans lequel la direction de l'axe Z fait référence à la direction à travers l'épaisseur du film.

2. Le procédé selon la revendication 1, dans lequel l'étape d'étirage de la préforme extrudée comprend :
i) l'étirage uniaxial de la préforme extrudée dans des conditions où le rapport d'étirage longitudinal ou transversal est de 2 à 50 fois ; ou
ii) l'étirage uniaxial de la préforme extrudée dans des conditions où le rapport d'étirage longitudinal ou transversal est de 2 à 50, et l'étirage biaxial de l'article formé étiré uniaxialement une ou plusieurs fois dans des conditions où le rapport d'étirage longitudinal ou transversal est de 2 à 50.

3. Le procédé selon la revendication 1, dans lequel la résine fluorée comprend au moins un composé à base de fluor choisi dans le groupe constitué par le polytétrafluoroéthylène (PTFE), un copolymère de tétrafluoroéthylène et de perfluoroalkylvinylether (PFA), un copolymère de tétrafluoroéthylène et d'hexafluoropropylène (FEP), une résine copolymère d'éthylène et de tétrafluoroéthylène (ETFE), un copolymère de tétrafluoroéthylène et de chlorotrifluoroéthylène (TFE/CTFE) et une résine d'éthylène et de chlorotrifluoroéthylène (ECTFE).
